(19) Europäisches Patentamt
European Patent Office
Office européen des brevets

(11) EP 3 708 620 B1

(12) # EUROPEAN PATENT SPECIFICATION

(45) Date of publication and mention of the grant of the patent:
**28.07.2021 Bulletin 2021/30**

(51) Int Cl.:
***C09D 17/00*** *(2006.01)*

(21) Application number: **19162970.8**

(22) Date of filing: **14.03.2019**

(54) **PIGMENT DISPERSION COMPRISING SILANE-MODIFIED COLLOIDAL SILICA PARTICLES AND A WATER-SOLUBLE THICKENING POLYMER**

PIGMENTDISPERSION MIT SILANMODIFIZIERTEN KOLLOIDALEN KIESELSÄUREPARTIKELN UND EINEM WASSERLÖSLICHEN VERDICKENDEN POLYMER

DISPERSION DE PIGMENTS COMPRENANT DES PARTICULES DE SILICE COLLOÏDALE MODIFIÉES PAR SILANE ET UN POLYMÈRE ÉPAISSISSANT SOLUBLE DANS L'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.09.2020 Bulletin 2020/38**

(73) Proprietors:
- **Keimfarben GmbH**
  **86420 Diedorf (DE)**
- **Nouryon Chemicals International B.V.**
  **6824BM Arnhem (NL)**

(72) Inventors:
- **Greenwood, Peter**
  **6824 BM Arnhem (NL)**
- **Heiberger, Franz**
  **86420 Diedorf (DE)**
- **Lugert, Rüdiger**
  **86420 Diedorf (DE)**
- **Wilhelm, Patrick**
  **6824 BM Arnhem (NL)**
- **Zimmerly, Florian**
  **86420 Diedorf (DE)**

(74) Representative: **Hoffmann Eitle**
**Patent- und Rechtsanwälte PartmbB**
**Arabellastraße 30**
**81925 München (DE)**

(56) References cited:
**WO-A1-2008/057029**
**WO-A1-2017/127708**
**US-A1- 2008 295 738**

EP 3 708 620 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a pigment dispersion, the use thereof for formulating a paint, and to a method of preparing a paint.

### Technical Background

Pigments for the formulation of paints can be used in the form of a pigment powder or as pre-formulated mixtures such as a pigment paste or a pigment dispersion. The pre-mixed pigment dispersions are useful in view of the ease of mixing and the adjustment of the desired color tone.

WO 2004/035474 relates to a method of producing an aqueous dispersion comprising mixing at least one silane compound and colloidal silica particles to form silanized colloidal silica particles, mixing said silanized colloidal silica particles with an organic binder to form the dispersion.

US 2008/0295738 is directed to a method of producing a substantially aqueous pigment dispersion substantially free from an organic binder comprising mixing at least one water-soluble or water-dispersible silane compound and colloidal silica particles to form silanized colloidal silica particles in an aqueous dispersion, followed by mixing said silanized colloidal silica particles with an organic and/or inorganic pigment to form a substantially aqueous pigment dispersion. In particular, such pigment dispersions are useful for tinting paint composition or plaster systems. For instance, the paint manufacturer provides a base paint composition which comprises filler pigments only, and the actual adjustment of the color, the tinting, is performed at the point of use by admixing a predetermined amount of the pigment dispersion. Thus, it is possible to individually tailor the color to the customer's need, e.g., in order to match the color to that of an existing coating.

For this purpose, specific tinting equipment can be used, which include supply tanks and dosing means for adding one or more different pigment dispersions. The base paint is fed to the tinting apparatus, and appropriate amounts of one or more pigment dispersions are added in order to adjust the final color.

EP 3239251 describes a kit-of-part tinting system, comprising a basic paint composition including a black pigment, a solvent and additives, and at least one, preferably at least 14 pigment-containing hue compositions.

For use in such tinting equipment, there is need for pigment dispersions exhibiting sufficient storage stability. If only a part of the pigment dispersion is consumed in the tinting operation, the remainder in the supply tank should not precipitate or change its viscosity, so that it can be safely used for the next tinting operation without clogging the equipment. Furthermore, for thus-tinted paints, there may be the problem that the pigments are less intensely linked to the binder and filler components of the base paint composition, thus being prone to wash-out, specifically when used for facades or other surfaces exposed to weather and rain.

### Summary of the Invention

In view of the above, the present invention seeks to provide a pigment dispersion which exhibits excellent storage stability, so that it can be used as pigment supply in tinting equipment for an extended period of time, and which allows the formulation of tinted paints with good wash-out resistance.

Specifically, the present invention provides a pigment dispersion comprising:

- Silane-modified colloidal silica particles;
- an organic and/or inorganic pigment;
- a water-soluble thickening polymer in an amount of 0.1 wt.% or more, based on the weight of the pigment dispersion, and
- water.

Another aspect of the present invention relates to the use of the pigment dispersion for formulating a paint. In particular, the pigment dispersion is useful for tinting the paint, which means to color or modify the color of the paint, e.g., in order to adjust the color of the paint to the color of an existing coating.

Yet another aspect of the present invention relates to a method for tinting a paint using the pigment dispersion. Preferably, the paint is a sol-silicate-based paint.

## Brief Description of the Drawings

Figure 1 is a plot of the viscosity of a comparative pigment dispersion comprising 0.05% of xanthan gum and an inventive pigment dispersion comprising 0.2% of xanthan gum.

## Detailed Description

In the following, the ingredients of the pigment dispersion of the present invention, the preparation of said pigment dispersion and the use thereof in a paint composition will be described in greater detail

## Silane-modified colloidal silica

In accordance with the present invention, the silane-modified colloidal silica refers to colloidal silica particles, usually provided in the form of an aqueous silica sol, which are reacted with a silane compound. The silane compound may form stable covalent siloxane bonds (Si-O-Si) with the silanol groups of the silica or may be linked to the silanol groups, e.g. by hydrogen bonds on the surface of the colloidal silica particles.

The content of the silane-modified colloidal silica particles in the pigment dispersion may be, e.g., in the range of 1 to 40 wt%, preferably 2 to 30 wt.%, more preferably 2.5 to 20 wt.%, and still more preferably 3 to 15 wt.% in terms of $SiO_2$, based on the weight of the pigment dispersion.

Typically, the silane-modified colloidal silica particles can be added in the form of a pre-formulated colloidal silica sol with a solid content of, e.g. 10-80%, which either is already provided as a silane-modified dispersion or which is reacted with the silane in the course of the preparation of the pigment dispersion.

The colloidal silica particles, the silane compounds and the modification procedure are described below in greater detail.

## Colloidal silica particles

The colloidal silica particles may be derived from e.g. precipitated silica, micro silica (silica fume), pyrogenic silica (fumed silica) or silica gels, and mixtures thereof. The particles are typically comprised in a colloidal aqueous dispersion also known as silica sol.

According to one embodiment, the colloidal silica particles are negatively charged. Such particles can be prepared from a soluble silicate source, for example an alkali metal silicate solution such as water glass, or an ammonium silicate solution. The soluble silicate is ion exchanged to produce polysilicic acid, and the pH is raised to enable growth of anionic colloidal silica particles. Sols made in this way tend to have very low amounts of aggregated silica particles, compared for example to dispersing solid forms of silica in a liquid medium.

Colloidal silica particles and silica sols may be modified and can contain other elements such as amines, aluminium and/or boron, which can be present in the particles and/or the continuous phase. Boron-modified silica sols are described in e.g. US 2,630,410. The alumina-modified silica particles may have an $Al_2O_3$ content of, e.g., from 0.05 to 3 wt%, preferably from 0.1 to 2 wt%. The procedure of preparing an alumina-modified silica sol is further described in e.g. "The Chemistry of Silica", by Iler, K. Ralph, pages 407-409, John Wiley & Sons (1979) and in US 5 368 833.
The colloidal silica particles employed suitably have an average particle diameter usually ranging from 2 to 150, preferably from 2 to 100, more preferably 3 to 50, still more preferably 4 to 40, yet more preferably 4 to 15, and even more preferably 5 to 12 nm. Suitably, the colloidal silica particles have a specific surface area, e.g., from 20 to 1500, preferably from 50 to 900, more preferably 70 to 700 and still more preferably from 100 to 600 $m^2/g$, yet more preferably 150 to 500, and even more preferably 250 to 500 $m^2/g$, measured by Sears titration (G.W.Sears; Anal. Chem., 1956, 28(12) pp1981-1983). The average particle diameter can be determined from the titrated surface area using a calculation described in "The Chemistry of Silica", by Iler, K. Ralph, page 465, John Wiley & Sons (1979), i.e.:

$$\text{Particle diameter(nm)} = \frac{2720}{\text{Surface Area}(\text{m}^2\text{g}^{-1})}$$

Other methods to obtain volume average particle size, for example, include laser diffraction.

The colloidal silica particles may have a narrow particle size distribution, i.e. a low relative standard deviation of the particle size. The relative standard deviation of the particle size distribution is the ratio of the standard deviation of the particle size distribution to the mean particle size by numbers. The relative standard deviation of the particle size distribution may be lower than, e.g., 60% by numbers, preferably lower than 30% by numbers, more preferably lower than 15% by numbers.

In the silica sol, the colloidal silica particles are suitably in an aqueous solvent, suitably in the presence of stabilising cations such as $K^+$, $Na^+$, $Li^+$, $NH_4^+$, organic cations such as quaternary ammonium compounds, or amines such as primary, secondary or tertiary amines, or mixtures thereof so as to form an aqueous silica sol. Examples of suitable amines and quaternary amines can be found in US2003/0066617. However, also colloidal silica dispersed in partially organic dispersions including e.g. water-miscible solvents such as lower alcohols with 1 to 4 carbon atoms, acetone or mixtures thereof may be used, wherein the volume of the organic portion can be in an amount of, for example, from 1 to 20 %, preferably from 1 to 10 %, and more preferably 1 to 5 % by volume of the total aqueous and organic volume.

Suitably, the silica content in the sol is, e.g., from 1 to 80 wt.%, preferably from 5 to 80 wt.%, more preferably from 10 to 70 wt.%, e.g. still more preferably 15 to 60 wt.%, for example from 20 to 50 wt.%, of from 30 to 40 wt.%. The pH of the silica sol suitably is, e.g., from 1 to 13, preferably from 6 to 12, more preferably from 7.5 to 11. However, for aluminium-modified silica sols, the pH suitably is, e.g., from 1 to 12, preferably from 3.5 to 11.

The silica sol may have an S-value, e.g., from 20 to 100, preferably from 30 to 90, more preferably from 60 to 90. The S-value characterises the extent of aggregation of colloidal silica particles, i.e. the degree of aggregate or microgel formation, and is measured and calculated according to the formulas given in J. Phys. Chem. 60(1956), 955-957 by Iler et al.. The S-value depends on the silica content, the viscosity, and the density of the colloidal silica particles. A high S-value indicates a low microgel content. The S-value represents the amount of $SiO_2$ in percent by weight present in the dispersed phase of e.g. a silica sol. The degree of microgel can be controlled during the production process as further described in e.g. US 5,368,833. Commercially available examples for suitable sols include the Levasil™ series of Nouryon.

**Silanes**

The silane compounds to be admixed with colloidal silica particles may, e.g., be selected from organosilanes, such as mono-organosilanes and oligomeric organosilanes comprising 2 to 10 silicon atoms. Preferably, the silane compounds include at least one hydrolysable group such as halogen or alkoxy, so that they can undergo a condensation relation with the silanol groups on the surface of the silica particles.

Preferable organosilanes include those of general formula $R_xSiX_{4-x}$ wherein x is an integer of 0 to 3, R is an organic residue, which is bonded to the silicon atom by a C-Si bond, and X is halogen or alkoxy. In embodiments, the silane is a mono-organosilane, where x is 1. Where x is more than one, each R can be the same or different. Preferably, each R has 2 to 20 carbon atoms and includes a reactive group such as an epoxy group or a carbon-carbon double bond. As preferred instances of the reactive group of R, epoxy, glycidoxy, glycidoxypropyl, vinyl and gamma-methacryloxypropyl may be mentioned. Furthermore, X preferably is chlorine or $C_{1-4}$ alkoxy and x is preferably 2 or 3, more preferably 3. A mixture of two or more kinds of organosilanes may also be used. It is also possible to use oligo-silanes formed by condensation of two or more molecules of the organosilane(s).

Specific examples of the silane compounds include trimethoxysilane, octyl triethoxysilane, methyl triethoxysilane, methyl trimethoxysilane; isocyanate silane such as tris-[3-(trimethoxysilyl)propyl]isocyanurate; gammamercaptopropyl trimethoxysilane, bis-(3-[triethoxysilyl]propyl)polysulfide, beta-(3,4-epoxycyclohexyl)-ethyl trimethoxysilane; silanes containing an epoxy group (epoxy silane), glycidoxy and/or a glycidoxypropyl group such as gamma-glycidoxypropyl trimethoxysilane, gamma-glycidoxypropyl triethoxysilane, gamma-glycidoxypropyl methyldiethoxysilane, (3-glycidoxypropyl)trimethoxy silane, (3-glycidoxypropyl) hexyltrimethoxy silane, beta-(3,4-epoxycyclohexyl)-ethyltriethoxysilane; silanes containing a vinyl group such as vinyl triethoxysilane, vinyl trimethoxysilane, vinyl tris-(2-methoxyethoxy)silane, vinyl methyldimethoxysilane, vinyl triisopropoxysilane; gamma-methacryloxypropyl trimethoxysilane, gamma-methacryloxypropyl triisopropoxysilane, gamma-methacryloxypropyl triethoxysilane, octyltrimethyloxy silane, ethyltrimethoxy silane, propyltriethoxy silane, phenyltrimethoxy silane, 3-mercaptopropyltriethoxy silane, cyclohexyltrimethoxy silane, cyclohexyltriethoxy silane, dimethyldimethoxy silane, 3-chloropropyltriethoxy silane, 3-methacryloxypropyltrimethoxy silane, i-butyltriethoxy silane, trimethylethoxy silane, phenyldimethylethoxy silane, hexamethyldisiloxane, trimethylsilyl chloride, hexamethyldisilizane, and mixtures thereof. US 4,927,749 discloses further suitable silanes which may be used in the present invention.

**Silane-modification of the colloidal silica**

The silane modification may be performed by mixing the silane compound with the colloidal silica particles.

According to one embodiment, the silane and colloidal silica particles are admixed in a weight ratio of silane to silica ranging, e.g., from 0.25 to 1.5, preferably from 0.3 to 1.2, more preferably from 0.35 to 0.8, still more preferably from 0.4 to 0.8.

Alternatively, the ratio of silane and colloidal silica also can be specified in terms of molecule number per surface area. In this case, the amount of added silane to the colloidal silica particles suitably may be, e.g., from 0.1 to 6, preferably from 0.3 to 3, more preferably from 1 to 2 silane molecules per $nm^2$ surface area of the colloidal silica particles.

According to one embodiment, at least 1 % by number of the silanol surface groups on the colloidal silica particles are capable of binding or linking to silane groups of the silane compounds, for example at least 5 %, preferably least 10 %, more preferably at least 30 %, even more preferably at least 50 % bind or link to a silane group.

The silane compound can be diluted before mixing it with the colloidal silica particles, for example with water to form a premix of silane and water, suitably in a weight ratio of silane to water from, e.g., 1:8 to 8:1, preferably from 3:1 to 1:3, more preferably from 1.5:1 to 1:1.5. The resulting silane-water solution is substantially clear and stable and easy to mix with the colloidal silica particles.

The mixing of silane and silica may be carried out at a pH from 1 to 13, preferably from 6 to 12, more preferably from 7.5 to 11, still more preferably from 9 to 10.5.

According to one embodiment, the mixing of silane and colloidal silica particles may be carried out continuously, for example at a temperature from 20 to 95°C, preferably from 50 to 75°C, more preferably from 60 to 70°C. The silane may be slowly added to the silica particles under vigorous agitation at a controlled rate, which suitably is, e.g., from 0.01 to 100, preferably from 0.1 to 10, more preferably from 0.5 to 5, still more preferably from 1 to 2 silane molecules per $nm^2$ colloidal silica surface area (on the colloidal silica particles) and hour. The addition of silane can be continued for any suitable time depending on the addition rate, amount of silane to be added, and degree of desired silanisation. However, the addition of silane may be continued up to 5 hours, for example up to 2 hours until a suitable amount of silane has been added.

In embodiments, the silane reactant can be pre-hydrolysed, to convert alkoxy or halide groups to -OH groups, as described for example by Greenwood and Gevert, Pigment and Resin Technology, 2011, 40(5), pp 275-284. This can make reaction with the surface of the colloidal silica more efficient.

After the addition of silane to the colloidal silica particles, the mixing may be continued from 1 second to 30 minutes, preferably from 1 to 10 minutes after the addition of silane is stopped.

The dispersion may contain besides silanized colloidal silica particles also, at least to some extent, non-silanized colloidal silica particles depending, e.g., on the size of the silica particles, weight ratio of silane to silica, type of silane compound mixed and the reaction conditions. Suitably, at least 40 wt.% of the colloidal silica particles are silanized, preferably at least 65 wt.%, more preferably at least 90 wt.%, still more preferably at least 95 wt.%, and yet more preferably at least 99 wt.%.

The dispersion may comprise besides silane in the form of silane groups or silane derivatives bound or linked to the surface of the silica particles also at least to some extent freely dispersed unbound silane compounds. Suitably, at least 40 wt.%, preferably at least 60 wt.%, more preferably at least 75 wt.%, still more preferably at least 90 wt.%, even more preferably at least 95 wt.% of the silane compounds are bound or linked to the surface of the silica particles. Pre-formulated silane modified silica sols such as the Levasil™ CC series of Nouryon can also be used. A preferable example is Levasil™ CC 151, which is a glycidyloxypropyl silane-modified silica sol with a solid content of 15 wt.% and an average particle size of 5 nm.

In embodiments, where the R group of the organosilane comprises a reactive group, the reaction conditions used in modifying the colloidal silica can cause a change in the reactive group. For example, where the reactive group is or comprises an epoxy group, hydrolysis can occur to form corresponding vicinal diol groups. Thus, an epoxy group becomes a diol group, and a glycidyloxy alkyl group becomes a 3-(1,2-propandiol)-alkoxy group (e.g. a 3-(1,2-propandiol)-propoxy group).

**Pigment**

The pigment is not specifically limited, and any kind of inorganic or organic pigment can be used. Examples for suitable pigments are, e.g., described in Ullmann's Encyclopedia of Industrial Chemistry, Vol. A 18, Chapter "Paints and Coatings", Section 4 (Pigments and Extenders).

Inorganic pigments are preferable. When used in connection with silicate paints as described below, the pigment preferably should be stable with respect to alkali.

Examples for suitable pigments include low-opacity white pigments, which are generally also referred to as "fillers" or "extenders", high-opacity white pigments and colored pigments, including black pigments and chromatic pigments. Besides, pigments for conferring special effects, such as metallic effect pigments or glass flakes, can also be used.

The low-opacity white pigments are defined as white pigment with a refractive of less than 1.7. Such low-opacity white pigments are also known as "white fillers" pursuant to DIN 55 943, or shortly as "fillers" or "extenders". In the following, these terms will be used interchangeably. Respective examples for the low-opacity white pigments include white minerals such as calcium carbonate, calcium sulfate, barium sulfate, alumina or silica and various silicate minerals such as talc, kaolin or mica.

The high-opacity white pigments refers to a white pigment with a refractive index of 1.7 or more, and respective examples thereof include titanium dioxide, zinc oxide, zinc sulfide, lithopone, basic lead sulfate or basic lead carbonate.

In the following, the term "colored pigment" is understood as referring to any pigment with a color different from white, and specifically includes chromatic pigments and black pigments. Examples include iron oxide pigments such as $Fe_3O_4$, $Fe_2O_3$, FeOOH, chromium (III) oxide, cobalt compounds such as cobalt aluminate, mixed oxides such as spinels, bismuth vanadate pigments or molybdate pigments and titanates.

Mixtures of different pigments may be used as well. In such mixtures low-opacity white pigments may be comprised as extenders together with one or more high-opacity white pigments or colored pigments, in order to adjust the overall opacity and brightness of the color tone.

The particle size of the pigment is not specifically limited and also may depend on the pigment type. A typical range is 1 to 10000 nm, preferably 1 to 5000 nm, more preferably 1 to 1000 nm and still more preferably 5 to 800 nm.

The concentration of the pigment can be in the range of 5 to 85 wt.%, preferably 15 to 80 wt.%, more preferably 20 to 75 wt.%, based on the weight of the pigment dispersion.

**Thickening polymer**

The pigment dispersion comprises a water-soluble thickening polymer, which preferably has a thickening effect such that a solution of the polymer in water with a polymer concentration of 1.0% by weight has a viscosity of at least 500 mPa*s, measured with a rheometer at 20.0°C.

Furthermore, the thickening polymer is preferably capable of being cross-linked by metal cations. Specifically, the metal cations can be polyvalent metal cations present, e.g., in the pigment dispersion and/or paint formulation to be mixed with the pigment dispersion, and the polymer chains associate with the metal cations via coordinative and/or ionic bonds.

The water-soluble thickening polymer improves both the storage stability of the pigment dispersion and the color durability of the thus-formulated paint, specifically the weather resistance and the resistance against wash-out. Without wanting to be bound by theory, it is believed that the association of the polymer molecules with the silica particles by hydrogen bonding and/or the viscosity increasing effect inhibits an agglomeration, thus increasing the storage stability.

The concentration of the polymer is at least 0.1 wt.% and preferably at least 0.2 wt.%, relative to the weight of the pigment dispersion. The maximum concentration is not specifically limited and may be suitably selected in accordance with the desired viscosity. Usually, the concentration is 10 wt.% or less, preferably 5 wt.% or less, more preferably 3 wt.% or less. Concentrations in the range of 0.3 to 2 wt.%, specifically 0.4 to 1.5% are particularly preferable.

Examples of the thickening polymer include water-soluble synthetic polymers as well as natural polymeric thickeners or modified derivatives thereof such as protein hydrolysates (e.g., gelatin) or polysaccharides.

As examples for the water-soluble synthetic polymers, polyvinylalcohol and (meth)acrylic polymers or co-polymers can be mentioned. Polyacrylic acid or salts thereof such as sodium polyacrylate, optionally copolymerized with neutral vinylic and/or acrylic monomers, are preferable.

The polysaccharide can be a natural polysaccharide or a chemically modified polysaccharide such as a polysaccharide ester or ether, and may be non-ionic, anionic, amphoteric or cationic.

Examples for non-ionic polysaccharides include galactomannan gums such as guar gum, locust bean gum, tara gum, fenugreek gum or cassia gum, ether derivatives thereof such as hydroxypropyl guar, cellulose ethers such as hydroxyethylcellulose (HEC), methyl hydroxyethylcellulose (MHEC), ethyl hydroxyethylcellulose (EHEC), methyl ethyl hydroxyethylcellulose (MEHEC), hydroxypropylcellulose (HPC), hydroxypropylmethylcellulose (HPMC), hydrophobically modified derivatives thereof such as HM-EHEC, starch and starch ethers such as hydroxypropyl starch and dextrins.

Examples for anionic polysaccharides include alginate, pectin, hyaluronate, anionic gums such as xanthan gum, dehydroxanthan gum, hydroxypropyl xanthan gum, gum arabic, gum karaya or gum tragacanth, or polysaccharides which have been modified by introduction of an anionic group such as carboxymethyl cellulose (CMC).

Examples for the cationic polysaccharides include the above-listed non-ionic polysaccharides into which tertiary amino groups or quaternary ammonium groups have been introduced, such as cationized cellulose, cationic starch or cationic guar gum. Analogously, examples for the amphoteric polysaccharide include the above-listed anionic polymers, which have been further modified by introduction of tertiary amino groups or quaternary ammonium groups.

In view of the agglomeration preventing effect and the crosslinkability by metal cations, the polysaccharide preferably is an anionic polysaccharide, more preferably xanthan gum, dehydroxanthan gum or hydroxypropyl xanthan gum, and still more preferably xanthan gum.

**Pigment dispersion**

The pigment dispersion may be prepared by mixing a silica sol comprising the silane modified silica particles with the pigment and the thickening polymer, using a suitable mixing apparatus. For instance, the silane modified silica sol can be put into a dissolver, and the pigment and the polymer are slowly added under stirring.

The total viscosity of the pigment dispersion can be suitably adjusted by modifying the solids content, the

content of the thickening polymer and the energy input of the mixing process, and may usually be in the range of 500 to 5000 mPa*s, preferably 1000 to 3000 mPa*s, measured at with a rotation rheometer at 20.0°C. The solid content of the pigment dispersion is usually in the range of 10 to 85%, preferably 20 to 75%, more preferably 25 to 70%.

The pigment dispersion of the present invention generally is useful for all purposes which require addition of a pigment. Preferably, the pigment dispersion may be used for coating compositions of any kind, and for paints in particular.

**Use for formulating a paint**

In accordance with the present invention, the pigment dispersion is useful for formulating a paint. Paint compositions generally comprise at least a dye or a pigment, a binder component for forming the coating film and binding the pigment, and a solvent. Optional further ingredients may include fillers, drying agents, curing agents or dispersion agents.

The pigment dispersion may either be added as an initial pigment component when manufacturing the paint, or can be added at a later stage to a pre-manufactured pigment-containing base paint, in order to modify or adjust the color thereof (in the following also referred to as "tinting"). For instance, said base paint may be formulated with a white pigment, e.g., a low-opacity white pigment ("filler pigment"), a high-opacity white pigment or a mixture thereof, and the pigment dispersion may comprise a colored pigment in order to confer color to the paint. Alternatively, the base paint may already comprise colored pigments, and the pigment dispersion is added for the fine adjustment of the color tone, e.g., in order to match the color to an existing coating. Preferably, the base paint at least comprises one or more filler pigments.

In accordance with the present invention, the paint preferably is a silicate paint, specifically a silicate paint using an aqueous solvent and water glass as a binder. According to DIN 18 363, section 2.4.1, silicate paints can be either provided as two-component systems or one-component systems.

The two-component systems may be purely inorganic, wherein the first component only comprises the binder, usually potassium water glass, as an aqueous solution. The second component comprises pigments, fillers and optional additives, and is provided in the form of a powder or paste. The two components are mixed and homogenized before use.

The one-component systems include conventional dispersion silicate paints comprising water glass, pigments and organic constituents in an amount not exceeding 5 wt%. Another type of one-component silicate paints are sol-silicate paints, which further include a silica sol. Such paints are described, e.g., in EP 1 222 234 and DE 100 01 831, respectively. For use in the present invention, sol-silicate paints are preferable.

**Silicate base paint compositions**

A preferable base paint composition for use in the present invention comprises the following components:

(A) water glass or a mixture of silica sol and water glass, the molar ratio of $SiO_2$ to alkali oxide being 5 to 30 mol of $SiO_2$ per mol of alkali oxide; and
(B) a mineral component, which includes at least a filler and optionally a high-opacity white pigment and/or a colored pigment;

Optionally, a polymer (C) and/or an organic ammonium compound (D) may also be contained. Other optional components comprise pigments, thickeners and dispersants as well as water as a solvent. The base paint is mixed with one or more pigment dispersions of the present invention, in order to confer or adjust the final color.

**Water glass (A)**

In component (A), the molar ratio of $SiO_2$ to alkali oxide in the water glass or in the mixture of water glass and silica sol in component (B-1) is 5 to 30 mol of $SiO_2$ per mol of alkali oxide, preferably 15 to 25 mol of $SiO_2$ per mol of alkali oxide and especially preferably 20 mol of $SiO_2$ per mol of alkali oxide. As is common in silicate analysis, the amounts of the components have been specified on the basis of the oxides.

Water glass is defined as melts of alkali silicates and aqueous solutions thereof which may be obtained from alkali carbonates and $SiO_2$ and which have solidified in a manner similar to glass. In the silicate paint, the water glass or the mixture of water glass and silica sol acts as a binder and brings about the specific characteristics of siliceous coating materials.

After application, the paint is silicified by the evaporation of water and reaction with carbon dioxide, i.e. the binder is converted into a water-insoluble siliceous network which may include the components of the substrate. This results in a very hard coating having high gas permeability. The water glass used is generally prepared by melting quartz sand together with alkali carbonate.

The alkali oxide of the water glass is, for example, lithium, sodium or potassium oxide. Potassium oxide is preferred, because it has a lower tendency towards efflorescence than sodium oxide and is less expensive than lithium oxide. The alkali oxide is preferably contained in an amount of 0.5 to 3 wt.-%, especially preferably 0.5 to 0.8 wt.-% based on the total weight of the silicate paint. An alkali oxide content of 0.5 wt.-% is most preferred.

As explained above, a silica sol is an aqueous dispersion of colloidal silica particles. Preferably, an alkaline silica sol is used. Moreover, a solid content of 10 to 50% is preferred. In addition, the silica sol advantageously has a mean particle size of <10 nm. The silica sols used are also preferably characterized by a very even and fine distribution spectrum. The same silica sols as described above in connection with the silane-modified colloidal silica particles of the pigment dispersion may be used.

The water glass or the mixture of water glass and silica sol is preferably contained in an amount of 3 to 40 wt.-%, especially preferably 15 to 35 wt.-% based on the total weight of the siliceous coating material. If a mixture of water glass and silica sol is used, the silica sol may be present in a ratio of 3 to 30 wt.-% based on the total weight of the siliceous coating material.

**Mineral component (B)**

The mineral component (B) generally includes at least a filler, which is a low-opacity white pigment with a refractive index of less than 1.7 as defined above. Optionally, one or more high-opacity white pigments and/or one or more colored pigments may be comprised.

In one embodiment, the base paint comprises only one or more fillers as the mineral component (B), and the pigment dispersion is added in order to confer color or brightness (in case of high-opacity white pigments).

In an alternative embodiment, the base paint is already pre-formulated with a specific brightness color or by incorporation of a high-opacity white pigment or colored pigment, respectively, further to the filler, and the pigment dispersion rather is used for the fine adjustment of the color or for matching the color to an existing coating.

The filler, the high-opacity white pigments and the colored pigments are generally the same as described above in connection with the pigment dispersion.

Preferably, in order to confer a smooth and shiny surface, the filler preferably includes calcium carbonate. Furthermore, in view of the improvement of the crack strength of the coating, it is also preferable to include plateletshaped fillers such as sheet silicates (e.g., mica, kaolinite, muscovite or chlorite).

The total amount of the mineral component (B) preferably is in the range of 10 to 45 wt.%.

**Polymer (C)**

The base paint that may be used according to the invention may further contain a polymer. Siliceous coating materials containing a polymer are especially used as dispersion silicate paints.

According to the DIN regulation 18 363, section 2.4.1, dispersion silicate paints must not contain more than 5% of organic elements maximum. Irrespective of this DIN guideline, however, a polymer in an amount of up to 15 wt.-%, especially 1 to 15 wt.-%, preferably 3 to 10 wt.-% may be comprised. Generally, the polymer is incorporated into the siliceous coating material in the form of a dispersion. The solids content of the polymer dispersion is preferably 20 to 80 wt.-%. Preferably, the polymer is a (meth)acrylate homopolymer or copolymer or a styrene acrylic copolymer. A (ethylhexyl acrylate)-methyl methacrylate copolymer is especially preferred.

**Ammonium compounds (D)**

An organic ammonium compound (D) may be admixed to the silicate paint in order to prevent gelatinisation. Ammonium compounds suitable for this purpose are described in DE 100 01 831 and comprise compounds of the formula (I):

$$^{+}NR^1R^2R^3R^4\ X^- \qquad (I)$$

wherein $R^1$, $R^2$ and $R^3$ independently represent an alkyl group having 1 to 20 carbon atoms which may optionally be substituted with a functional group or hydrogen, $R^4$ represents an alkyl group having 1 to 20 carbon atoms, hydrogen or - $(CH_2)_x$-$N^+R^5R^6R^7Y^-$ wherein $R^5$, $R^6$ and $R^7$ independently represent an alkyl group having 1 to 20 carbon atoms which may optionally be substituted with a functional group or hydrogen, and wherein at least one of $R^1$, $R^2$, $R^3$ and $R^4$ is not hydrogen, x represents a number between 1 and 6 and $X^-$ and $Y^-$ each represent an anion. The functional group as a substituent of the alkyl group may, for example, be a hydroxy group, an amino group, a thiol group, preferably a hydroxy group. The choice of the anion is not particularly limited as long as the effect of the organic ammonium compound is not reduced. For example, the anion may be $F^-$, $Cl^-$, $Br^-$, $I^-$ or $OH^-$.

An organic ammonium compound of the formula (II) is especially preferred:

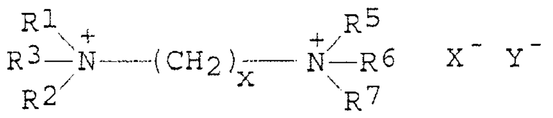

(II)

wherein $R^1$, $R^2$, $R^5$ and $R^7$ each independently represent an alkyl group having 1 to 20 carbon atoms or hydrogen, $R^3$ and $R^6$ each independently represent a hydroxy-substituted alkyl group having 1 to 6 carbon atoms, x is a number between 1 and 6 and $X^-$ and $Y^-$ may be the same or different and each represent an anion, e.g. $F^-$, $Cl^-$, $Br^-$, $I^-$ or $OH^-$.

The alkyl groups of the formulae (I) or (II) preferably contain 1 to 6 carbon atoms; selected examples are methyl, ethyl, propyl, isopropyl, n-butyl, tert-butyl, pentyl, hexyl and cyclohexyl. Selected examples of a hydroxy-substituted alkyl group having 1 to 6 carbon atoms are hydroxymethyl, hydroxyethyl, 1-hydroxypropyl and 2-hydroxypropyl.

Especially preferred is an organic ammonium compound wherein $R^1$, $R^2$, $R^5$ and $R^7$ each represent a methyl group, $R^3$ and $R^6$ each represent a 2-hydroxypropyl group, x is a number between 1 and 3 and $X^-$ and $Y^-$ each are $OH^-$.

The organic ammonium compound is preferably contained in the silicate paint in an amount of 0.1 to 3 wt.-% based on the total weight of the silicate paint.

**Other components**

The silicate paint may contain additional components such as thickeners, hydrophobing agents, dispersants and/or defoaming agents.

Examples for thickeners include the same thickening polymers as discussed above for the pigment dispersion such as polysaccharides, cellulose or xanthan, as well as inorganic thickeners, e.g., sheet silicates such as bentonite or synthetic phyllosilicates. Their content may be 0.1 to 5 wt.-% based on the total weight of the silicate paint.

The hydrophobing agent may comprise polysiloxanes and especially amino-functional polysiloxanes, for example. The hydrophobing agent may be present in an amount of 0.1 to 5 wt.-% based on the total weight of the silicate paint.

An example of a dispersant that may be used is tetrasodium-N-(1,2-dicarboxyethyl)-N-alkylsulfosuccinamide. The dispersant is preferably present in an amount of 0.1 to 0.5 wt.-% based on the total weight of the silicate paint.

Examples for the defoaming agent include hydrophobic silicic acid, liquid hydrocarbons, non-ionogenic emulsifiers and/or synthetic copolymers. The preferred amount of the defoaming agent is 0.1 to 1 wt.-% based on the total weight of the silicate paint.

In addition, the silicate paint may contain water, preferably in an amount of 20 to 50 wt.-% based on the total weight of the silicate paint.

**Examples**

**Example 1: Preparation of pigment dispersions and evaluation of storage stability**

A reference pigment dispersion was prepared by mixing 51,95 mass % silane modified silica sol (Levasil™ CC 151 of Nouryon, 15 wt.% solid content), 48 mass% pigment (iron oxide FeOOH) and 0.05 mass% xanthan gum. The mixing was performed at room temperature for 20 minutes, using a dissolver. The viscosity, measured with a rotation rheometer (Anton - Paar MC1) at 20°C, was approximately 1300 mPa*s.

Furthermore, a pigment dispersion in accordance with the present invention was prepared in the same way, except that the content of xanthan gum was increased to 0.2 mass%, and the mixing energy was increased, mixing time was 40 minutes, in order to obtain the same initial viscosity.

The pigment dispersions were stored at room temperature for three months, and viscosity was measured at day 2, 8, 28 and 90. The results are shown in Figure 1.

The inventive composition with 0.2 mass% xanthan gum maintained its appearance throughout the entire storage period. As can be seen in Figure 1, the viscosity firstly showed a slight increase to about 2200 mPa*s at day 2, probably because of the higher content of thickening polymer, and then remained approximately constant. The final viscosity was approximately 2900 mPa*s, which is easy to process, thus confirming a good storage stability.

For the reference composition with 0.05% xanthan gum, on the other hand, the viscosity already exceeded 14000 mPa*s at day 28 and reached a final value of 16000 mPa*s after three months. A further processing of the pigment dispersion was no longer possible because the viscosity was too high.

**Example 2: Weathering resistance in comparison to conventionally tinted paints**

A pigment dispersion was prepared in the same way as described in Example 1, except that iron oxide red ($Fe_2O_3$) was used as the pigment. A non-pigmented sol silicate paint was tinted with 30% of the pigment dispersion. The desired color shape was Color Index PR101.

For reference, a conventionally tinted silicate paint was prepared, using the same sol silicate paint and a commercial pigment dispersion with color index PR101. The color was adjusted to be the same.

The paints were applied to fiber cement boards as the substrates, allowed to dry for one week at room temperature, and the initial color was determined with a colorimeter. Then the coated substrates were subjected to artificial weathering pursuant to ISO 11507 and natural weathering pursuant to ISO 2810 (two years), respectively. After completion of the weathering tests, the final color of each substrate was determined, and the color difference ΔE* (CIELAB) with respect to the initial color was calculated. A low ΔE* value indicates a small change in colour.

The results are shown in the following Table 1. As is apparent, the color differences of the coatings with the paints tinted with the inventive pigment dispersion are smaller, indicating improved weathering resistance.

Table 1:

| | Sol silicate paint tinted with inventive pigment dispersion | Conventionally tinted sol silicate paint |
|---|---|---|
| Color change (ΔE*) after artificial weathering (ISO 11507) | 0.59 | 3.22 |
| Color change (ΔE*) after 2 years natural weathering (ISO 2810) | 0.89 | 2.12 |

**Example 3: Long-term weathering resistance**

Red, green and blue silicate paints were prepared by tinting non-pigmented sol silicate paints with pigment dispersions according to the present invention. The pigment dispersions had the same compositions as described in Example 1, except that iron oxide red, chromium oxide green and cobalt alumina oxide blue, respectively, were used as the pigments.

Fiber cement boards were coated with the paints and subjected to a natural weathering test pursuant to ISO 2810 in the same way as described in Example 2. The color was measured after 1 year and after 5 years, and the color difference ΔE* (CIELAB) with respect to the initial color was determined. The results are shown in the following Table 2.

Table 2:

| | Color change (ΔE*) after 1 year natural weathering (ISO 2810) | Color change (ΔE*) after 5 years natural weathering (ISO 2810) |
|---|---|---|
| Iron oxide red | 0.2 | 1.2 |
| Chromium oxide green | 0.3 | 0.7 |
| Cobalt aluminum oxide blue | 0.3 | 1.1 |

The results show that the paints tinted according to the present invention exhibit excellent long-term weathering resistance.

**Example 4: Long-term weathering resistance in comparison to silicate paint formulated with a pigment powder**

Yellow, red and blue silicate paints classically pigmented with iron oxide-hydroxide yellow PY 119 (Bayferrox, Mapico, Sicotrans), iron oxide red PR 101 (Bayferrox, Mapico, Sicptrans, Nubifer) and cobalt alumina oxide powder blue PB 28(Ferro, Nubicem) were used as reference.

Using the same pigments, yellow, red and blue pigment dispersions were prepared as described in Example 1, and used for tinting white base silicate paint following DIN 18363 (Granital™ of Keimfarben), such that the respective colors of the resulting tinted paints was the same as for the reference paints.

Fiber cement boards were coated with the paints and subjected to a natural weathering test pursuant to ISO 2810 in the same way as described in Example 2, the color was measured after 5 years, and the color difference ΔE*

(CIELAB) with respect to the initial color was determined. The results are shown in Table 3 below.

Table 3:

| | Color change (ΔE*) after 5 years natural weathering (ISO 2810) | |
|---|---|---|
| | Silicate paint tinted with pigment powder | Silicate paint tinted with pigment dispersion of the invention |
| Iron oxide-hydroxide yellow | 4.7 | 1.9 |
| Chromium oxide green | 2.6 | 1.3 |
| Cobalt aluminum oxide blue | 2.4 | 1.3 |

The results show superior weathering resistance of the paints tinted according to the present invention, as compared to paints conventionally tinted with pigment powders.

## Claims

1. Pigment dispersion comprising:

   - silane-modified colloidal silica particles;
   - an organic and/or inorganic pigment;
   - a water-soluble thickening polymer in an amount of 0.1 wt.% or more, based on the weight of the pigment dispersion, and
   - water.

2. Pigment dispersion according to claim 1, comprising:

   - 1 to 40 wt.% of the silane-modified colloidal silica particles;
   - 10 to 85 wt.% of the pigment; and
   - 0.1 to 10 wt.% of the water-soluble thickening polymer;

3. Pigment dispersion according to claim 1 or 2, wherein the colloidal silica particles are obtained by mixing a silica sol with one or more silanes of the following general formula or oligomers thereof:

   $$R_xSiX_{4-x}$$

   wherein

   x is an integer of 0 to 3,
   R is an organic residue bonded to the silicon atom by a C-Si bond, which comprises 2 to 20 carbon atoms and a reactive group selected from a carbon-carbon double bond and an epoxy group; and
   X is chlorine or $C_{1-4}$ alkoxy.

4. Pigment dispersion according to any one of claims 1 to 3, wherein the silane-modified colloidal silica particles have a volume average particle size of 2 to 150 nm.

5. Pigment dispersion according to any one of claims 1 to 4, wherein the pigment has a volume average particle size of 10 to 10000 nm.

6. Pigment dispersions according to any one of claims 1 to 5, wherein the water-soluble thickening polymer is a polysaccharide.

7. Pigment dispersions according to claim 6, wherein the polysaccharide is selected from xanthan gum, dehydroxanthan gum and hydroxypropyl xanthan gum.

**8.** Use of the pigment dispersion as defined in any one of claims 1 to 7 for formulating a paint or render.

**9.** Method for tinting a paint, comprising the addition of the pigment dispersion as defined in any one of the claims 1 to 7 to a base paint or render.

**10.** Method according to claim 9, wherein the base paint is a silicate paint.

**11.** Method according to claim 10, wherein the base paint comprises:

(A) water glass or a mixture of silica sol and water glass, the molar ratio of $SiO_2$ to alkali oxide being 5 to 30 mol of $SiO_2$ per mol of alkali oxide; and
(B) a mineral component, which includes at least a filler and optionally a high-opacity white pigment and/or a colored pigment.

**Patentansprüche**

**1.** Pigmentdispersion, umfassend:

- silanmodifizierte kolloidale Siliciumdioxidpartikel;
- ein organisches und/oder anorganisches Pigment;
- ein wasserlösliches Verdickungspolymer in einer Menge von 0,1 Gew.-% oder mehr, bezogen auf das Gewicht der Pigmentdispersion; und
- Wasser.

**2.** Pigmentdispersion gemäß Anspruch 1, umfassend:

- 1 bis 40 Gew.-% der silanmodifizierten kolloidalen Siliciumdioxidpartikel;
- 10 bis 85 Gew.-% des Pigments; und
- 0,1 bis 10 Gew.-% des wasserlöslichen Verdickungspolymers.

**3.** Pigmentdispersion gemäß Anspruch 1 oder 2, wobei die kolloidalen Siliciumdioxidpartikel durch Mischen eines Siliciumdioxidsols mit einem oder mehreren Silanen der folgenden allgemeinen Formel oder Oligomeren davon erhalten werden:

$$R_xSiX_{4-x}$$

worin

x eine ganze Zahl von 0 bis 3 ist,
R ein organischer Rest ist, der an das Siliciumatom über eine C-Si-Bindung gebunden ist, der 2 bis 20 Kohlenstoffatome und eine reaktive Gruppe, ausgewählt aus einer Kohlenstoff-Kohlenstoff-Doppelbindung und einer Epoxygruppe, umfasst; und
X Chlor oder $C_{1-4}$-Alkoxy ist.

**4.** Pigmentdispersion gemäß einem der Ansprüche 1 bis 3, wobei die silanmodifizierten kolloidalen Siliciumdioxidpartikel eine volumenmittlere Partikelgröße von 2 bis 150 nm aufweisen.

**5.** Pigmentdispersion gemäß einem der Ansprüche 1 bis 4, wobei das Pigment eine volumenmittlere Partikelgröße von 10 bis 10000 nm aufweist.

**6.** Pigmentdispersionen gemäß einem der Ansprüche 1 bis 5, wobei das wasserlösliche Verdickungspolymer ein Polysaccharid ist.

**7.** Pigmentdispersionen gemäß Anspruch 6, wobei das Polysaccharid aus Xanthangummi, Dehydroxanthangummi und Hydroxypropylxanthangummi ausgewählt ist.

**8.** Verwendung der Pigmentdispersion, wie in einem der Ansprüche 1 bis 7 definiert, zur Formulierung einer Farbe

oder eines Putzes.

**9.** Verfahren zum Tönen einer Farbe, umfassend die Zugabe der Pigmentdispersion, wie in einem der Ansprüche 1 bis 7 definiert, zu einer Grundfarbe oder einem Grundputz.

**10.** Verfahren gemäß Anspruch 9, bei dem die Grundfarbe eine Silicatfarbe ist.

**11.** Verfahren gemäß Anspruch 10, bei dem die Grundfarbe umfasst:

(A) Wasserglas oder eine Mischung aus Siliciumdioxidsol und Wasserglas, wobei das Molverhältnis von $SiO_2$ zu Alkalioxid 5 bis 30 Mol $SiO_2$ pro Mol Alkalioxid beträgt; und
(B) eine mineralische Komponente, die mindestens einen Füllstoff und optional ein hochdeckendes Weißpigment und/oder ein Farbpigment enthält.

## Revendications

**1.** Dispersion de pigments comprenant :

- des particules de silice colloïdale modifiées par silane ;
- un pigment organique et/ou inorganique ;
- un polymère épaississant soluble dans l'eau en une quantité de 0,1 % en poids ou plus, sur la base du poids de la dispersion de pigments, et
- de l'eau.

**2.** Dispersion de pigments selon la revendication 1, comprenant :

- de 1 à 40 % en poids des particules de silice colloïdale modifiées par silane ;
- de 10 à 85 % en poids du pigment ; et
- de 0,1 à 10 % en poids du polymère épaississant soluble dans l'eau.

**3.** Dispersion de pigments selon la revendication 1 ou 2, dans laquelle les particules de silice colloïdale sont obtenues en mélangeant un sol de silice avec un ou plusieurs silanes de la formule générale suivante ou des oligomères de celui-ci :

$$R_xSiX_{4-x}$$

dans laquelle
x est un entier de 0 à 3,
R est un résidu organique lié à l'atome de silicium par une liaison C-Si, qui comprend de 2 à 20 atomes de carbone et un groupe réactif sélectionné parmi une double liaison carbone-carbone et un groupe époxy ; et
X est du chlore ou un $C_{1-4}$ alcoxy.

**4.** Dispersion de pigments selon l'une quelconque des revendications 1 à 3, dans laquelle les particules de silice colloïdale modifiées par silane présentent une taille de particule moyenne en volume de 2 à 150 nm.

**5.** Dispersion de pigments selon l'une quelconque des revendications 1 à 4, dans laquelle le pigment présente une taille de particule moyenne en volume de 10 à 10 000 nm.

**6.** Dispersions de pigments selon l'une quelconque des revendications 1 à 5, dans lesquelles le polymère épaississant soluble dans l'eau est un polysaccharide.

**7.** Dispersions de pigments selon la revendication 6, dans lesquelles le polysaccharide est sélectionné parmi de la gomme de xanthane, de la gomme de déhydroxanthane et de la gomme de xanthane hydroxypropyle.

**8.** Utilisation de la dispersion de pigments telle que définie selon l'une quelconque des revendications 1 à 7 pour formuler une peinture ou un enduit.

**9.** Procédé pour teinter une peinture, comprenant l'ajout de la dispersion de pigments telle que définie selon l'une quelconque des revendications 1 à 7 à une peinture ou un enduit de base.

**10.** Procédé selon la revendication 9, dans lequel la peinture de base est une peinture au silicate.

**11.** Procédé selon la revendication 10, dans lequel la peinture de base comprend :

(A) du silicate de sodium ou un mélange de sol de silice et de silicate de sodium, le rapport molaire de $SiO_2$ sur l'oxyde alcalin étant de 5 à 30 moles de $SiO_2$ par mole d'oxyde alcalin ; et
(B) un composant minéral, qui inclut au moins un agent de remplissage et optionnellement un pigment blanc à opacité élevée et/ou un pigment coloré.

Figure 1

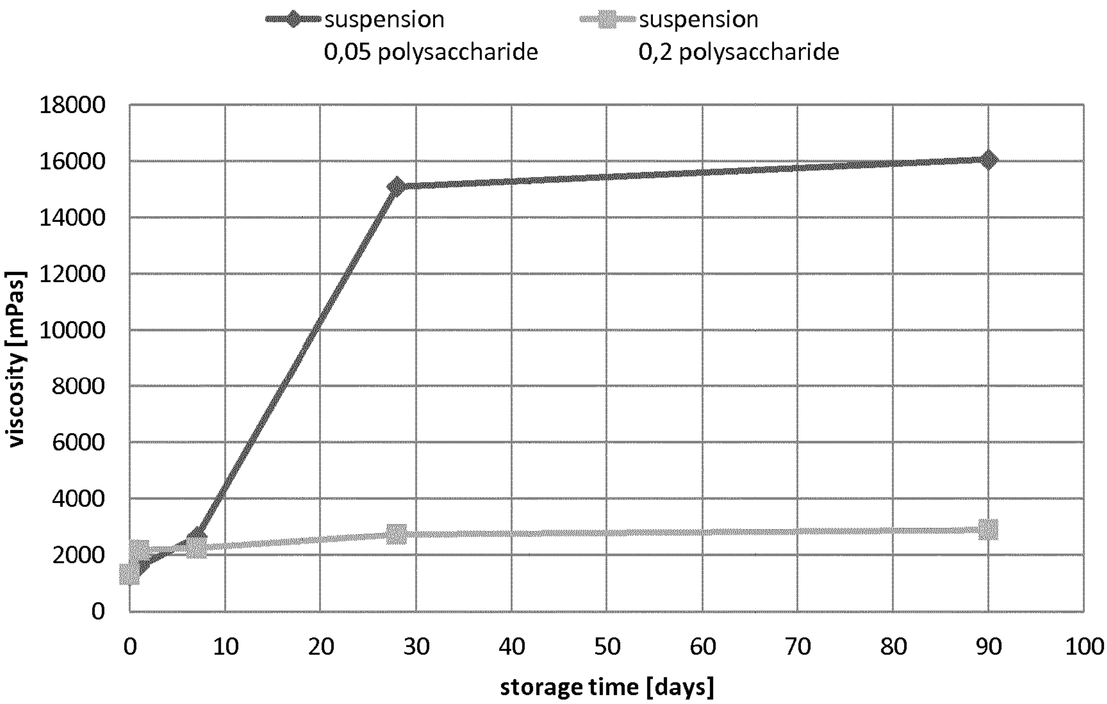
suspension
0,05 polysaccharide
suspension
0,2 polysaccharide
18000
16000
14000
12000
10000
8000
6000
4000
2000
0
viscosity [mPas]
0
10
20
30
40
50
60
70
80
90
100
storage time [days]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004035474 A
- US 20080295738 A
- EP 3239251 A
- US 2630410 A
- US 5368833 A
- US 20030066617 A
- US 4927749 A
- EP 1222234 A
- DE 10001831


### Non-patent literature cited in the description


- **ILER, K. RALPH.** The Chemistry of Silica. John Wiley & Sons, 1979, 407-409
- **G.W.SEARS.** *Anal. Chem.,* 1956, vol. 28 (12), 1981-1983
- **ILER, K. RALPH.** The Chemistry of Silica. John Wiley & Sons, 1979, 465
- **ILER.** *J. Phys. Chem.,* 1956, vol. 60, 955-957
- **GREENWOOD ; GEVERT.** *Pigment and Resin Technology,* 2011, vol. 40 (5), 275-284
- Paints and Coatings. Ullmann's Encyclopedia of Industrial Chemistry. vol. A 18